# EUROPÄISCHE PATENTSCHRIFT

(11) **EP 3 807 195 B1**
(45) Veröffentlichungstag und Bekanntmachung des Hinweises auf die Patenterteilung: **17.04.2024**
(21) Anmeldenummer: 19722123.7
(22) Anmeldetag: 06.05.2019
(51) Int. Cl.: B65G 47/252, B08B 9/20, B08B 9/44, B65G 47/57, B65G 47/82

(54) **VORRICHTUNG ZUM TRANSPORTIEREN VON BEHÄLTERN IN EINER REINIGUNGSMASCHINE**
DEVICE FOR TRANSPORTING CONTAINERS IN A CLEANING MACHINE
DISPOSITIF POUR TRANSPORTER DES RÉCIPIENTS DANS UNE MACHINE DE NETTOYAGE

(30) Priorität: 13.06.2018 DE 102018114154
(43) Veröffentlichungstag der Anmeldung: 21.04.2021
(73) Patentinhaber: KHS GmbH, 44143 Dortmund (DE)
(72) Erfinder: TAYLOR, Marco, 58640 Iserlohn (DE)
(86) Internationale Anmeldenummer: PCT/EP2019/061571
(87) Internationale Veröffentlichungsnummer: WO 2019/238314

(56) Entgegenhaltungen:
- EP-A1- 3 121 136
- AT-B- 399 675
- DE-A1- 2 501 267
- DE-U1- 20 113 995
- JP-A- H1 053 328
- JP-A- S5 836 820

## Beschreibung

Die Erfindung bezieht sich auf eine Vorrichtung zum Transportieren von Behältern gemäß den Merkmalen des Oberbegriffs des Patentanspruches 1.

Der Einsatz von Behältern - wie z. B. Mehrwegbehälter in der Getränkeindustrie - setzt voraus, dass diese Behälter nach ihrer Rückkehr vom Verbraucher gereinigt, gefüllt und wieder verschlossen werden. Als Mehrwegbehälter werden heute eine Vielzahl an verschiedenen Behälterformen und Behältergeometrien verwendet, insbesondere mit Variationen in Höhe, Durchmesser und Mündungsbeschaffenheit. Weiterhin werden Mehrwegbehälter aus unterschiedlichen Materialien, wie beispielsweise Glasflaschen oder Kunststoffflaschen, verwendet.

Zur Reinigung werden die Behälter einer Behälterreinigungsmaschine übergeben, wobei jeder Behälter einzeln in einer Behälterzelle aufgenommen und damit durch die Behälterreinigungsmaschine und damit auch durch die unterschiedlichen Behandlungsstationen bzw. maschinen in der Behälterreinigungsmaschine transportiert wird.

Die Aufnahme des Behälters in die jeweilige Behälterzelle erfolgt dabei mittels Vorrichtungen zum Transportieren von Behältern. Derartige Vorrichtungen, wie beispielsweise aus den Druckschriften DE 201 13 995 U1, EP 1 762 513 A1 und EP 3 097 989 A1 bekannt, umfassen zumindest eine Transporteinrichtung und eine an die Transporteinrichtung anschließende Behälteraufnahmeeinrichtung.

Die Transporteinrichtungen sind im Stand der Technik auch bekannt als Zulauftische, Stautische oder Zulaufbänder. Gemein haben sie aber alle, dass sie ein bandartiges Transportmittel sind. Zudem weisen die bekannten Transporteinrichtungen allesamt zwei Umlenkbereiche auf, zwischen denen zumindest ein Transportbereich zum Transport der Behälter an einen Übergabebereich zwischen der Transporteinrichtung und der Behälteraufnahmeeinrichtung und zumindest einen Rückführbereich zur Rückführung des bandartigen Transportmittels entgegen der Transportrichtung vorgesehen ist.

Die Behälteraufnahmeeinrichtung nimmt dann ein Transportieren der Behälter in die jeweiligen Behälterzellen vor. Insbesondere werden dabei Höhenunterschiede zwischen der Transporteinrichtung und der Behälterzelle überbrückt. Dabei erfährt der Behälter von der Behälteraufnahmeeinrichtung dann eine Schwenkbewegung von einem Mitnehmer einer sich drehenden Scheibe, um ihn von einer vertikalen Position auf der Transporteinrichtung in eine im Wesentlichen horizontale Position, in welcher der Behälter in die Behälterzelle eingeführt werden kann, zu schwenken. Die sich drehende Scheibe der Behälteraufnahmeeinrichtung bzw. eine Welle, auf der die Scheibe angeordnet ist, ist oftmals mit einer angetriebenen Schwinge gekoppelt, um die Scheibe und deren Mitnehmer zusätzlich mit einer Drehbewegung beaufschlagen zu können. Der Antrieb der Schwinge ist dabei oftmals als Servo-Motor ausgebildet und ermöglicht eine Drehbewegung der Schwinge von bis zu 180°. Eine entsprechende Behälteraufnahmeeinrichtung ist beispielsweise aus der DE 201 13 995 U1 bekannt.

DE20113995U1 offenbart eine Vorrichtung gemäß dem Oberbegriff des Anspruchs 1.

Bekannt sind aber auch diverse andere Antriebsarten, um unterschiedliche Bewegungsabläufe der Behälteraufnahmeeinrichtung zu ermöglichen, wie beispielsweise in der EP 0 856 365 A2 offenbart.

Aus der Praxis ist bekannt, dass zur Beschleunigung und Abbremsung des Servomotors mechanische Anschläge in der Behälteraufnahmeeinrichtung verwendet werden, um im Allgemeinen eine Drehbewegung festzulegen bzw. zu begrenzen und somit auch die Schwinge in eine Nullstellung (Grundstellung) zu bringen. Anschließend kann dann die Position der angetriebenen Schwinge in der Behälteraufnahmeeinrichtung mit optischen Bauelementen ermittelt bzw. kontrolliert werden. Nachteilig ist, dass zum einen die verbauten mechanischen Anschläge sich als nicht praxistauglich aufgrund von Lageinstabilität gezeigt haben und zum anderen durch die mechanischen Anschläge keine individuellen Kurven des Antriebs bzw. der Schwinge gefahren werden können. Die Position der Scheibe und deren Mitnehmer bzw. auch die Welle wurden bis dato mit mechanischen Hilfswerkzeugen gemessen bzw. kontrolliert. Nachteilig daran ist, dass man mit diesen mechanischen Hilfswerkzeugen schlecht in die Behälteraufnahmeeinrichtung gelangt, da die Scheibe, die Welle und dgl. schlecht zugänglich sind.

Aufgabe der vorliegenden Erfindung ist es daher, eine Vorrichtung zum Transportieren von Behältern bereitzustellen, die eine im Vergleich zum Stand der Technik verbesserte Messung bzw. Kontrolle der Behälteraufnahmeeinrichtung ermöglicht und zugleich Rückschlüsse auf evtl. Fehlerquellen aufzeigt.

Die Aufgabe wird durch eine Vorrichtung zum Transportieren von Behältern gemäß den Merkmalen des unabhängigen Patentanspruchs 1 gelöst. Die jeweiligen Unteransprüche betreffen dabei besonders bevorzugte Ausführungsvarianten der Erfindung.

Die Erfindung wird durch die Vorrichtung gemäß Anspruch 1 definiert.

Vorteilhaft können aufgrund der erfindungsgemäßen Erfassung der Drehposition und/oder Winkelposition mechanische Bauteile, wie beispielsweise mechanische Anschläge, entfallen, deren Anbringung an der Scheibe beim Stand der Technik zur Störungen oder Betriebsausfällen geführt haben. Gemäß einer weiteren vorteilhaften Ausführungsvariante ist dabei vorgesehen, dass die Sensoreinheit als Inkrementalgebereinheit ausgebildet ist. Vorteilhaft ist mit derartigen Inkrementalgebereinheiten äußerst zuverlässig die Drehposition und/oder Winkelstellung der Scheibe bzw. Änderungen hiervon erfassbar. Hierbei weist die Inkrementalgebereinheit in einer bevorzugten Ausführungsvariante zumindest ein Positionsgeberelement und zumindest ein um die Welle drehbares Positionssensorelement auf.

Gemäß einer nochmals weiteren vorteilhaften Ausführungsvariante ist dabei vorgesehen, dass das Positionsgeberelement auf der Welle angebracht ist. Gemäß einer nochmals weiteren vorteilhaften Ausführungsvariante ist dabei vorgesehen, dass das Positionssensorelement auf der Scheibe angebracht ist.

Dabei ist die Welle der Scheibe mit einer Schwinge befestigt. Durch die Anbindung einer Schwinge an der Welle der Scheibe ist das Drehverhalten und/oder Drehmoment der Scheibe steuerbar.

Dabei ist vorgesehen, dass die Schwinge einen zweiten Antrieb aufweist, mittels welchem die Schwinge hin und her bewegbar ist.

Gemäß einer nochmals weiteren vorteilhaften Ausführungsvariante ist dabei vorgesehen, dass die Inkrementalgebereinheit und/oder die Neigungssensoreinheit mit einer Steuer- und Auswerteeinheit verbunden ist/sind. Hierdurch ist vorteilhafterweise dann das gesamte Bewegungsprofil, welches ein zu überführender Behälter durch die gekoppelte Schwingen- und Scheibenbewegung durchläuft, zu jedem Zeitpunkt bekannt und steuerbar.

Weiterbildungen, Vorteile und Anwendungsmöglichkeiten der Erfindung ergeben sich auch aus der nachfolgenden Beschreibung von Ausführungsbeispielen und aus den Figuren.
- Fig. 1: beispielhaft eine Vorrichtung zum Transportieren von Behältern umfassend eine Transporteinrichtung und eine sich daran anschließende Behälteraufnahmeeinrichtung innerhalb einer Behältereinigungsmaschine in schematischer Seitenansicht;
- Fig. 2: beispielhaft die Vorrichtung zum Transportieren von Behältern in einer schematischen Seitenansicht; und
- Fig. 3: beispielhaft einen vergrößerten Ausschnitt der Behälteraufnahmeeinrichtung gemäß des gestrichelten Kreises X der Fig. 2.

Für gleiche oder gleich wirkende Elemente der Erfindung werden in den Figuren identische Bezugszeichen verwendet. Ferner werden der Übersichtlichkeit halber nur Bezugszeichen in den einzelnen Figuren dargestellt, die für die Beschreibung der jeweiligen Figur erforderlich sind.

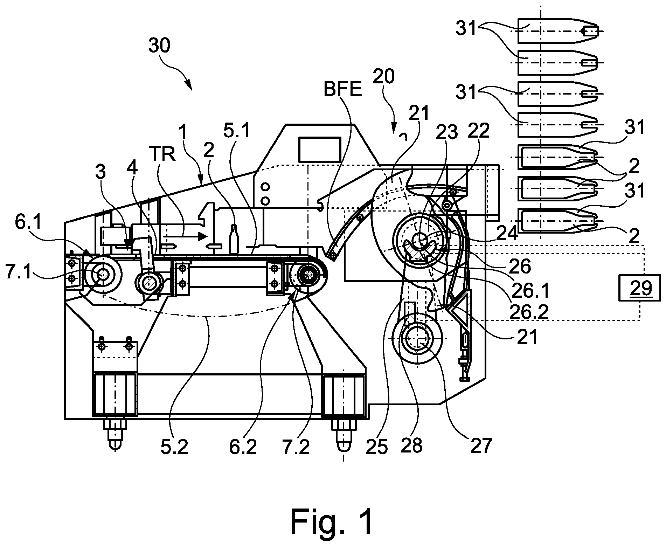

Figur 1 zeigt ein Ausführungsbeispiel einer erfindungsgemäßen Vorrichtung 1 zum Transportieren von Behältern 2 entlang einer Transportrichtung TR in einer schematischen Seitenansicht. Wie beispielhaft dargestellt, ist die Vorrichtung 1 zum Transportieren von Behältern 2 innerhalb einer Behälterreinigungsmaschine 30 vorgesehen.

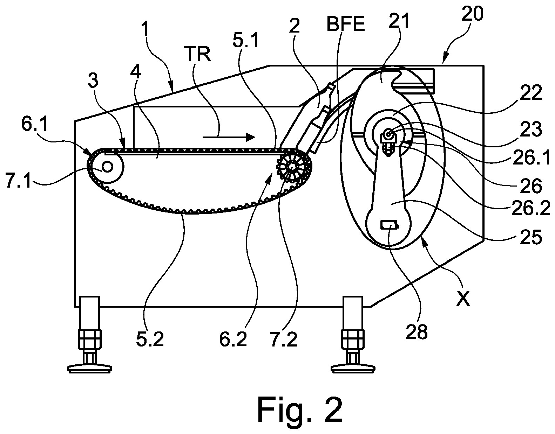

Die Vorrichtung 1 umfasst im vorliegenden Ausführungsbeispiel eine Transporteinrichtung 3 mit einem bandartigen Transportmittel 4 und eine sich daran in Transportrichtung TR anschließende Behälteraufnahmeeinrichtung 20. Die Vorrichtung 1 ist ebenso beispielhaft in einer schematischen Seitenansicht in Figur 2 dargestellt.

Die Transporteinrichtung 3 weist einen ersten Umlenkbereich 6.1 mit einer ersten Umlenkrolle 7.1 und einen zweiten Umlenkbereich 6.2 mit einer zweiten Umlenkrolle 7.2 auf, zwischen denen ein Transportbereich 5.1 zum Transport der Behälter 2 in Transportrichtung TR und ein Rückführbereich 5.2 zur Rückführung des bandartigen Transportmittels 4 entgegen der Transportrichtung TR vorgesehen ist. Vorzugsweise ist dabei die zweite Umlenkrolle 7.2 angetrieben, um das bandartige Transportmittel 4 in Transportrichtung TR verfahren zu lassen. Optional kann auch die erste Umlenkrolle 7.1 angetrieben bzw. nur hilfsweise angetrieben sein.

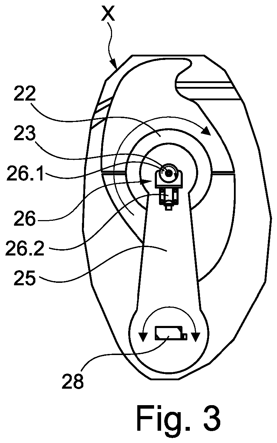

Die Behälteraufnahmeeinrichtung 20 weist in diesem Ausführungsbeispiel zwei an einer Scheibe 22 ausgebildete Mitnehmer 21 auf, die beispielsweise nasenförmige radial nach außen wegstehen und dazu dienen, in den Behälterboden einzugreifen und den jeweiligen Behälter 2 vom Transportband 3 abzuheben und schiebend entlang entsprechnednen Führungsbahnen in geeignete Behälterzellen 31 der Behälterreinigungsmaschine zu überführen. Figur 3 zeigt beispielhaft einen vergrößerten Ausschnitt der Behälteraufnahmeeinrichtung 20 gemäß des gestrichelten Kreises X der Figur 2.

Der zweite Mitnehmer 21 in Figur 3 ist hierbei verdeckt unter der Schwinge 25 dargestellt. Die sich mittels einem ersten Antrieb 24 drehende Scheibe 22 sitzt auf einer Welle 23. Von der Transporteinrichtung 3, insbesondere von dem Transportbereich 5.1 erfährt dann jeweils ein Behälter 2 von einem Mitnehmer 21 der Behälteraufnahmeeinrichtung 20 eine Schwenkbewegung, um den Behälter 2 von einer annähernd vertikalen Position auf dem Transportbereich 5.1 in eine im Wesentlichen horizontale Position, in welcher der Behälter 2 in eine Behälterzelle 31 der Behälterreinigungsmaschine 30 eingeführt werden kann, zu schwenken. Dabei wird der Behälter 2 mittels dem Mitnehmer 21 entlang einer Behälterführungsebene BFE der Behälteraufnahmeeinrichtung 20 transportiert, wobei dabei Höhenunterschiede zwischen der Transporteinrichtung 3 und der Behälterzelle 31 überbrückt werden.

Erfindungsgemäß weist die Behälteraufnahmeeinrichtung 20 eine Sensoreinheit 26 auf, die zur Erfassung der Drehposition und/oder Winkelstellung der Scheibe 22 ausgebildet ist.

Vorteilhaft ist die Sensoreinheit als Inkrementalgebereinheit 26 ausgebildet, welche sowohl mit der Scheibe 22 als auch mit der Welle 23 in Wirkverbindung steht bzw. jeweils verbunden ist. Mittels der Inkrementalgebereinheit 26 kann kontinuierlich oder diskontinuierlich die Lageposition bzw. Drehposition der Scheibe und der Scheibenwinkel erfasst werden. Die von der Inkrementalgebereinheit 26 bereitgestellten Messdaten werden zur Auswertung an eine Steuer- und Auswerteeinheit 29 übertragen.

Die Inkrementalgebereinheit 26 ist hinsichtlich der Funktionsweise mit einer Winkelsensoreinheit vergleichbar und weist hierzu zumindest ein Positionsgeberelement 26.1 und zumindest ein um die Welle 23 drehbares Positionssensorelement 26.2 auf, wobei hierzu in einer bevorzugten Ausführungsvariante das Positionsgeberelement 26 auf der Welle 23 und das Positionssensorelement 26.2 auf der Scheibe 22 angeordnet sind bzw. mit diesen in Wirkverbindung stehen.

Erfindungsgemäß ist die Welle 23 der Scheibe 22 mit einer Schwinge 25 verbunden. Erfindungsgemäß weist dann auch die Schwinge 25 einen zweiten Antrieb 27 auf, mittels welchem die Schwinge 25 hin und her bewegbar bzw. schwenkbar ist. Die Scheibe 22 ist hierbei mittels der Welle 23 um eine erste Drehachse drehbar gelagert, um welche die Schwinge ebenfalls hin und her bewegbar ist.

Vorteilhafterweise ist der zweite Antrieb 27 als Servo-Motoreinheit ausgebildet. So kann beispielsweise ein Synchronantrieb in Form eines Linearantriebs direkt an der Schwinge 25 angreifen, mit dem dann in Abhängigkeit von der Bewegungsgeschwindigkeit des ersten Antriebs 24 die Schwingbewegung des zweiten Antriebs 27 in die Drehbewegung der Scheibe 22 eingeleitet wird. Denkbar sind aber auch andere Antriebsarten des zweiten Antriebs 27 für die Schwinge 25, wie beispielsweise ein Kurbeltrieb. Zusammenfassend bedeutet dies, dass für die Behälteraufnahmeeinrichtung 20, insbesondere für den ersten Antrieb 24 der Scheibe 22 und den zweiten Antrieb 27 der Schwinge 27 alle bereits aus dem Stand der Technik einem Fachmann bekannten Bewegungsabläufe samt aller zu benötigenden Bauteile hier Verwendung finden können.

Erfindungsgemäß wird vorgesehen, wie ebenfalls in Fig. 1 dargestellt, dass auf der Schwinge 25 eine Neigungssensoreinheit 28 angeordnet ist. Somit kann mit der Erfindung auch die Lage hinsichtlich einer Winkelstellung der Schwinge 25 erfasst werden.

Folglich kann mittels der erfindungsgemäßen Vorrichtung sowohl die Lage bzw. die Position der Scheibe 22 als auch die Lage bzw. die Position der Schwinge 25 vorzugsweise kontinuierlich oder diskontinuierlich erfasst werden, so dass vorteilhafterweise keine mechanischen Bauteile, wie mechanische Anschläge, mehr verbaut werden müssen, deren Anbringung an der Scheibe 22 und/oder der Schwinge 25 in der Vergangenheit Probleme bereitete. Zudem waren die mechanischen Anschläge nicht lagestabil, so dass es immer wieder zu Ausfällen bzw. Reparaturen an den Vorrichtungen 1 gekommen ist.

Weiterhin von Vorteil ist, dass bei evtl. Störungen ein einfacher Rückschluss auf den Störkörper bzw. auf die möglichen Fehlerquellen in der Behälteraufnahmeeinrichtung 20 gezogen werden kann, da die Lage der Schwinge 25 und Scheibe 22 samt Welle 23 durch die Inkrementalgebereinheit 26 und/oder die Neigungssensoreinheit 28 stets genau bekannt sind. Die genaue Kenntnis der jeweiligen Winkelposition bietet den weiteren Vorteil, dass mit dem zweiten Antrieb 27 als Servo-Motor und der Schwinge 27 keine Grund- und Nullstellung mehr gefahren werden. Folglich kann das manuelle Anfahren der Grund- und Nullstellung des zweiten Antriebs 27 entfallen. Es können dadurch individuell Drehbewegungen (Kurven) mit dem zweiten Antrieb 27 und der Schwinge 27 fahren werden.

Die Steuer- und Auswerteeinheit 29 ist neben der Inkrementalgebereinheit 26 auch mit der Neigungssensoreinheit 28 verbunden, so dass eine zentrale Auswertung der von beiden Sensoreinheiten 26, 28 gelieferten Messsignale möglich ist.

Die Erfindung wurde voranstehend an Ausführungsbeispielen beschrieben. Es versteht sich, dass eine Vielzahl von Änderungen oder Abwandlungen möglich sind, ohne dass dadurch der durch die Patentansprüche definierte Schutzbereich der Erfindung verlassen wird.

### Bezugszeichenliste

- 1: Vorrichtung
- 2: Behälter
- 3: Transporteinrichtung
- 4: Transportmittel
- 5.1: Transportbereich
- 5.2: Rückbereich
- 6.1: erster Umlenkbereich
- 6.2: zweiter Umlenkbereich
- 7.1: erste Umlenkrolle
- 7.2: zweite Umlenkrolle

- 20: Behälteraufnahmeeinrichtung
- 21: Mitnehmer
- 22: Scheibe
- 23: Welle
- 24: erster Antrieb
- 25: Schwinge
- 26: Sensoreinheit bzw. Inkrementalgebereinheit
- 26.1: Positionsgeberelement
- 26.2: Positionssensorelement
- 27: zweiter Antrieb
- 28: Neigungssensoreinheit
- 29: Steuer- und Auswerteeinheit

- 30: Reinigungsmaschine
- 31: Behälterzelle

- BFE: Behälterführungsebene
- TR: Transportrichtung

## Patentansprüche

1. Vorrichtung (1) zum Transportieren von Behältern (2) entlang einer Transportrichtung (TR), vorzugsweise an eine oder innerhalb einer Behälterreinigungsmaschine (30), umfassend zumindest eine Transporteinrichtung (3) mit zumindest einem bandartigen Transportmittel (4) und zumindest eine sich daran in Transportrichtung (TR) anschließende Behälteraufnahmeeinrichtung (20), wobei die Behälteraufnahmeeinrichtung (20) eine mit einem ersten Antrieb (24) auf einer Welle (23) drehbare Scheibe (22) aufweist, die zumindest einen Mitnehmer (21) ausgebildet hat, wobei die Welle (23) der Scheibe (22) mit einer Schwinge (25) verbunden ist und die Schwinge (25) einen zweiten Antrieb (27) aufweist, mittels welchem die Schwinge (25) hin und her bewegbar ist **dadurch gekennzeichnet, dass** die Behälteraufnahmeeinrichtung (20) eine Sensoreinheit (26) aufweist, die zur Erfassung der Winkelstellung der Scheibe (22) ausgebildet ist, und eine auf der Schwinge (25) angeordnete_Neigungssensoreinheit (28) aufweist, die dazu ausgebildet ist, die Lage hinsichtlich einer Winkelposition der Schwinge (25) zu erfassen.

2. Vorrichtung (1) nach Anspruch 1, **dadurch gekennzeichnet, dass** die Sensoreinheit (26) als Inkrementalgebereinheit ausgebildet ist.

3. Vorrichtung (1) nach Anspruch 2, **dadurch gekennzeichnet, dass** die als Inkrementalgebereinheit ausgebildete Sensoreinheit (26) zumindest ein Positionsgeberelement (26.1) und zumindest ein um die Welle (23) drehbares Positionssensorelement (26.2) aufweist.

4. Vorrichtung (1) nach Anspruch 3, **dadurch gekennzeichnet, dass** das Positionsgeberelement (26.1) auf der Welle (23) angeordnet ist.

5. Vorrichtung (1) nach Anspruch 3 oder 4, **dadurch gekennzeichnet, dass** das Positionssensorelement (26.2) auf der Scheibe (22) angeordnet ist.

6. Vorrichtung (1) nach einem der Ansprüche 2 bis 5, **dadurch gekennzeichnet, dass** die als Inkrementalgebereinheit ausgebildete Sensoreinheit (26) mit einer Steuer- und Auswerteeinheit (29) verbunden ist.

7. Vorrichtung (1) nach einem der vorhergehenden Ansprüche, **dadurch gekennzeichnet, dass** die Neigungssensoreinheit (28) mit einer Steuer- und Auswerteeinheit (29) verbunden ist.

## Claims

1. Device (1) for transporting containers (2) along a transport direction (TR), preferably at or inside a container cleaning machine (30), comprising at least one transport apparatus (3) having at least one belt-type transport means (4) and following downstream from this in the transport direction (TR) at least one container-receiving apparatus (20), wherein the container-receiving apparatus (20) comprises a disk (22), which can be rotated on a shaft (23) by means of a first drive (24), and which has at least one driver element (21), wherein the shaft (23) of the disk (22) is connected to a rocker element (25), and the rocker element (25) comprises a second drive (27), by means of which the rocker element (25) can be moved to and fro, **characterised in that** the container-receiving apparatus (20) comprises a sensor unit (26), which is designed to sense the angular position of the disk (22), and an inclination sensor unit (28) arranged on the rocker element (25), which is designed to sense the position in respect of an angular position of the rocket element (25).

2. Device (1) according to claim 1, **characterised in that** the sensor unit (26) is configured as an incremental encoder unit.

3. Device (1) according to claim 2, **characterised in that** the sensor unit (26) configured as an incremental encoder unit comprises at least one position transmitter unit (26.1) and at least one position sensor unit (26.2) which can be rotated about the shaft (23).

4. Device (1) according to claim 3, **characterised in that** the position transmitter unit (26.1) is arranged on the shaft (23).

5. Device (1) according to claim 3 or 4, **characterised in that** the position sensor element (26.2) is arranged on the disk (22).

6. Device (1) according to any one of claims 2 to 5, **characterised in that** the sensor unit (26) configured as an incremental encoder unit is connected to a control and evaluation unit (29).

7. Device (1) according to any one of the preceding claims, **characterised in that** the inclination sensor unit (28) is connected to a control and evaluation unit (29).

## Revendications

1. Dispositif (1) pour transporter des contenants (2) le long d'une direction de transport (TR), de préférence sur une ou à l'intérieur d'une machine de nettoyage de contenants (30), comprenant au moins un système de transport (3) avec au moins un moyen de transport (4) de type bande et au moins un système de réception de contenants (20) s'y raccordant dans la direction de transport (TR), dans lequel le système de réception de contenants (20) présente un disque (22) pouvant tourner sur un arbre (23) avec un premier entraînement (24), qui a réalisé au moins un entraîneur (21), dans lequel l'arbre (23) du disque (22) est relié à un bras oscillant (25) et le bras oscillant (25) présente un deuxième entraînement (27), au moyen duquel le bras oscillant (25) peut être animé d'un mouvement de va-et-vient, **caractérisé en ce que** le système de réception de contenants (20) présente une unité de détection (26), qui est réalisée pour acquérir la position angulaire du disque (22), et présente une unité de détection d'inclinaison (28) disposée sur le bras oscillant (25), qui est réalisée pour acquérir la situation en ce qui concerne une posture angulaire du bras oscillant (25).

2. Dispositif (1) selon la revendication 1, **caractérisé en ce que** l'unité de détection (26) est réalisée en tant qu'unité de codeur incrémental.

3. Dispositif (1) selon la revendication 2, **caractérisé en ce que** l'unité de détection (26) réalisée en tant qu'unité de codeur incrémental présente au moins un élément transmetteur de posture (26.1) et au moins un élément capteur de posture (26.2) pouvant tourner autour de l'arbre (23).

4. Dispositif (1) selon la revendication 3, **caractérisé en ce que** l'élément transmetteur de posture (26.1) est disposé sur l'arbre (23).

5. Dispositif (1) selon la revendication 3 ou 4, **caractérisé en ce que** l'élément capteur de posture (26.2) est disposé sur le disque (22).

6. Dispositif (1) selon l'une quelconque des revendications 2 à 5, **caractérisé en ce que** l'unité de détection (26) réalisée en tant qu'unité de codeur incrémental est reliée à une unité de commande et d'évaluation (29).

7. Dispositif (1) selon l'une quelconque des revendications précédentes, **caractérisé en ce que** l'unité de détection et d'inclinaison (28) est reliée à une unité de commande et d'évaluation (29).
